**Europäisches Patentamt**

**European Patent Office**

**Office européen des brevets**

(19)

(11) Veröffentlichungsnummer : **0 428 523 B1**

(12)

# EUROPÄISCHE PATENTSCHRIFT

(45) Veröffentlichungstag der Patentschrift :
**04.03.92 Patentblatt 92/10**

(51) Int. Cl.$^5$ : **B60H 1/24**

(21) Anmeldenummer : **89906105.5**

(22) Anmeldetag : **26.05.89**

(86) Internationale Anmeldenummer :
**PCT/EP89/00582**

(87) Internationale Veröffentlichungsnummer :
**WO 90/01428 22.02.90 Gazette 90/05**

(54) **KLIMATISIERUNGSEINRICHTUNG FÜR KRAFTFAHRZEUGE.**

(30) Priorität : **12.08.88 DE 3827377**

(43) Veröffentlichungstag der Anmeldung :
**29.05.91 Patentblatt 91/22**

(45) Bekanntmachung des Hinweises auf die
Patenterteilung :
**04.03.92 Patentblatt 92/10**

(84) Benannte Vertragsstaaten :
**DE FR GB IT**

(56) Entgegenhaltungen :
**EP-A- 0 214 605**
**DE-A- 3 533 047**
**GB-A- 2 091 413**
**US-A- 4 788 903**
**Patent Abstracts of Japan, vo. 10, No. 122**
**(M-476)(2179), 7 May 1986**

(73) Patentinhaber : **AUDI AG**
**Auto-Union-Strasse 1 Postfach 220**
**W-8070 Ingolstadt (DE)**

(72) Erfinder : **PABST, Hans-Georg**
**Robert-Koch-Str. 2**
**W-8074 Gaimersheim (DE)**
Erfinder : **GROSSMANN, Holger**
**Blütenweg 10**
**W-8070 Ingolstadt (DE)**
Erfinder : **WIEDEMANN, Heinz**
**Salbeistr. 7**
**W-8070 Ingolstadt (DE)**
Erfinder : **NAUMANN, Fritz**
**Jahnstr. 29**
**W-8071 Stammham (DE)**

(74) Vertreter : **Engelhardt, Harald**
**Audi AG Postfach 2 20**
**W-8070 Ingolstadt (DE)**

EP 0 428 523 B1

Jouve, 18, rue Saint-Denis, 75001 PARIS

**Beschreibung**

Die Erfindung bezieht sich auf eine Klimatisierungseinrichtung für Kraftfahrzeuge gemäß dem Oberbegriff des Anspruchs 1.

Aus der DE-OS 33 04 575 ist eine Klimatisierungseinrichtung für Kraftfahrzeuge bekannt, bei der neben dem ohnehin im Fahrzeug enthaltenen Gebläse der normalen Heiz- und Belüftungsvorrichtung im Bereich von Entlüftungsöffnungen ein zusätzliches Gebläse vorgesehen ist. Dieses Gebläse soll einen schnelleren Luftaustausch durch Absaugen der Innenraumluft erreichen. Bevorzugt wird das zusätzliche Gebläse im rückwärtigem Bereich des Fahrgastraumes an vorhandenen Entlüftungsöffnungen montiert.

Eine Klimatisierungsvorrichtung für Fahrzeuge, die ebenfalls mit zwei Gebläsen arbeitet, ist aus der DE-OS 30 43 934 bekannt. Während das erste Gebläse in an sich bekannter Weise im Armaturenbrettbereich untergebracht ist, sitzt das zweite Gebläse hinter dem Rücksitz. Durch diese Ausgestaltung soll eine gleichmäßige Luftumwälzung im Fahrgastraum erreicht werden.

Der Erfindung liegt die Aufgabe zugrunde, eine gattungsgemäße Klimatisierungseinrichtung im Hinblick auf eine Geräuschreduzierung weiterzubilden.

Die Aufgabe wird durch die kennzeichnenden Merkmale des Patentanspruchs 1 gelöst.

Die Erfindung geht von der Überlegung aus, daß Gebläse überproportional laut sind, wenn sie mit hohen Drehzahlen im Bereich ihrer Leistungsgrenzen betrieben werden. Verwendet man anstelle von einem Gebläse zwei, welche zusammen die gleiche Leistung ergeben, dann stellt sich eine erhebliche Reduzierung des Lüftergeräusches ein. Dabei wird ein Teil des Mehraufwandes für ein zweites Gebläse zumindest teilweise dadurch kompensiert, daß jedes der beiden Gebläse nur für eine geringere Leistung ausgelegt sein muß.

Gemäß einer ersten Bauform der Erfindung können das erste und das zweite Gebläse unmittelbar hintereinander angeordnet sein. Unter diese Bauform fallen auch Ausführungen, bei denen das erste Gebläse beispielsweise am Eintritt in das Heiz- und Lüftungsgehäuse im Wasserkasten angeordnet ist und sich das zweite Gebläse im Gehäuse der Klimatisierungseinrichtung befindet.

Vorteilhaft wird das erste Gebläse jedoch im vorderen Bereich des Fahrzeuges angeordnet, wo es die Luft in den Fahrgastraum drückt während das zweite Gebläse zur Absaugung der Luft aus dem Fahrgastraum im Heckbereich des Fahrzeuges untergebracht ist. Für das zweite Gebläse ist eine Anordnung unmittelbar an den Entlüftungsöffnungen im Bereich des unteren Heckscheibenrandes oder einer Kofferraumwand denkbar. Die letztgenannte Anordnung hat den Vorteil, daß durch den Kofferraum und durch die von den Insassen weiter entfernte Anordnung des zweiten Gebläses das Geräuschniveau im Fahrgastraum weiter reduziert wird.

Das erste und das zweite Gebläse ist über eine Regeleinrichtung in der Weise regelbar, daß bei geschlossenen Türen/Fenstern/Schiebedach der Luftdruck im Fahrgastraum stets etwas größer als der Umgebungsdruck ist. Dadurch, daß im Fahrgastraum ein leichter Überdruck herrscht, wird einem Einströmen von Außenluft durch Ritzen und Fugen des Fahrzeuges entgegengewirkt.

Zur Regelung der Leistung der beiden Gebläse ist nur ein geeigneter Regler und eine Einrichtung notwendig, welche die Druckdifferenz zwischen dem Innenraum und der Umgebung ermittelt.

Durch das im Anspruch 2 gekennzeichnete Klimaprogramm wird in bezug auf die Gebläse nicht nur die Luftmenge vorgegeben, sondern auch sichergestellt, daß die Gebläse nicht hochlaufen, wenn ein plötzlicher Druckabfall im Innenraum - beispielsweise durch Öffnen eines Fensters - auftritt.

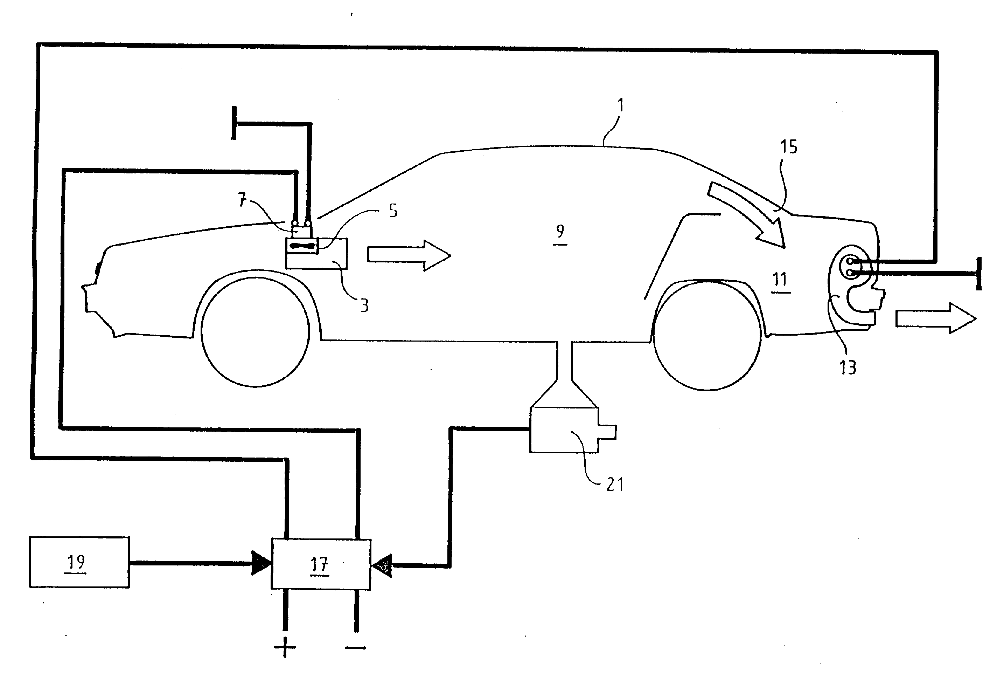

Weitere Einzelheiten und vorteilhafte Ausgestaltungen der Klimatisierungseinrichtung sind der Zeichnung der nachfolgenden Beschreibung zu entnehmen.

Eine schematisch wiedergegebene Fahrzeugkarosserie 1 weist im Armaturenbrettbereich ein Gehäuse 3 einer Klimatisierungseinrichtung auf. Das Gehäuse 3 trägt ein Gebläse 5, welches durch einen Elektromotor 7 antreibbar ist. Durch das Gebläse 5 wird Luft angesaugt und über ein nicht dargestelltes Verteilsystem und ggf. über eine Heizeinrichtung in den Fahrgastraum 9 gedrückt.

An den Fahrgastraum 9 schließt sich nach hinten ein Kofferraum 11 an, in dem ein zweites Gebläse 13 angeordnet ist. Das Gebläse 13 steht über eine seitliche Karosserieöffnung mit der Außenluft in Verbindung. Über Schlitze 15 im Bereich des unteren Heckscheibenrandes wird Luft aus dem Fahrgastraum 9 in den Kofferraum 11 gesaugt und gelangt von dort über das Gebläse 13 nach außen.

Die Regelung der beiden Gebläse 5 und 13 erfolgt über eine Regeleinrichtung 17 nach Maßgabe der gewünschten Klimatisierung (Klimaregelung 19) des Fahrgastraumes 9 und der Druckdifferenz zwischen dem Fahrgastraum 9 und der Umgebung.

Zur Erfassung der Druckdifferenz zwischen dem Fahrgastraum 9 und der Umgebungsluft ist ein an sich bekannter Differenzdruckmesser 21 vorgesehen, welcher die bestehende Druckdifferenz der Regeleinrichtung 17 meldet.

Bei eingeschalteter Klimatisierungseinrichtung meldet die Klimaregelung 19 der Regeleinrichtung 17 die für das gewählte Klimaprogramm erforderliche Luftmenge. Dem entsprechend steuert die Regeleinrichtung 17

2

die Motoren der Gebläse 5 und 13 an. Daraufhin stellt sich - zunächst einmal geschlossene Türen, Fenster und geschlossenes Schiebedach vorausgesetzt - ein bestimmter Druck im Fahrgastraum 9 ein. Die Druckdifferenz zwischen Fahrgastraum 9 und Umgebung wird von dem Differenzdruckmesser 21 erfaßt (Ist-Wert) und der Regeleinrichtung zugeleitet. In der Regeleinrichtung 17 ist ein Soll-Wert gespeichert, der um einen bestimmten Betrag größer ist als der momentane Außendruck. Durch diese Vorgabe soll erreicht werden, daß keine Luft durch Undichtigkeiten in das Fahrzeuginnere gesaugt wird.

Liegt der Druck im Fahrgastraum 9 über dem Soll-Wert, dann bedeutet dies, daß entweder das Gebläse 5 zuviel Luft in den Fahrgastraum 9 drückt bzw. das Gebläse 13 zuwenig Luft aus dem Fahrgastraum 9 absaugt. Die Regeleinrichtung 17 wird deshalb unter Beachtung des durch das Klimaprogramm vorgegebenen Luftdurchsatztes eine Verringerung der Drehzahl des Gebläses 5 und/oder eine Erhöhung der Drehzahl des Gebläses 13 veranlassen. Im ungekehrten Falle, nämlich wenn der Druck im Fahrgastraum 9 unter dem Soll-Wert liegt, veranlaßt die Regeleinrichtung 17 eine Anpasssung der Drehzahl im umgekehrten Sinn.

Der beschriebene Regelvorgang ist an sich während des gesamten Fahrbetriebes notwendig, da sich die Druckverhältnisse im Fahrgastraum 9 im wesentlichen abhängig von der Geschwindigkeit des Fahrzeuges ändern. So wird sich beispielsweise bei zunehmender Fahrgeschwindigkeit und konstanter Drehzahl des Gebläses 5 der Druck im Fahrgastraum 9 erhöhen, da sich der Staudruck vergrößert.

Wenn nun in dem Fahrzeug ein Fenster oder etwa das Schiebedach geöffnet wird, dann ist es nicht möglich, durch das System den gewünschten Überdruck zu erzeugen. Das Gebläse 5 wird deshalb jedoch nicht so angesteuert, daß es mit einer maximalen Drehzahl arbeitet, um zumindest in der Tendenz auf das gewünschte Druckniveau zuzusteuern. Der gesamten Regeleinrichtung 17 ist nämlich das Klimaprogramm übergeordnet, so daß das Gebläse 5 nur nach Maßgabe dieses Programms aktiviert wird. Auch in diesem Fall wird es zweckmäßig sein, das Gebläse 13 mitlaufen zu lassen, um eine bessere Entlüftung des Fondraumes zu gewährleisten.

Durch die Installation von zwei Gebläsen in Verbindung mit der Regeleinrichtung 17 wird erreicht, daß eine verbesserte Heizung bzw. Belüftung des Fahrgastraumes 9 erreicht wird und vor allen Dingen im Normalbetrieb eine wesentliche Reduzierung der Lüftergeräusche eintritt.

## Patentansprüche

1. Klimatisierungseinrichtung für Kraftfahrzeuge mit zwei in Reihe geschalteten Gebläsen, dadurch gekennzeichnet, daß bei geschlossenen Fenstern, Türen und geschlossenem Schiebedach/Verdeck im normalen Heiz- oder Lüftungsbetrieb das erste und das zweite Gebläse (5 bzw. 13) über eine Regeleinrichtung (17) in der Weise regelbar sind, daß jedes Gebläse (5, 13) nur einen Teil des vorgegebenen Luftdurchsatzes bewirkt, und daß der Luftdruck im Fahrgastraum stets etwas größer als der Umgebungsdruck ist.

2. Klimatisierungseinrichtung nach Anspruch 1, dadurch gekennzeichnet, daß der Regeleinrichtung (17) für die Gebläse (5, 13) ein Klimaprogramm übergeordnet ist, welches unabhängig von der Differenz zwischen dem Luftdruck im Fahrgastraum und dem Umgebungsdruck den von den Gebläsen (5, 13) zu erbringenden Luftdurchsatz festlegt.

3. Klimatisierungseinrichtung nach Anspruch 1, dadurch gekennzeichnet, daß das erste Gebläse (5) im vorderen Bereich des Fahrzeuges angeordnet ist und die Luft in den Fahrgastraum (9) drückt und das zweite Gebläse (13) im Heckbereich des Fahrzeuges untergebracht ist und Luft aus dem Fahrgastraum (9) absaugt.

## Claims

1. Air-conditioning device for motor vehicles having two fans connected in series, characterised in that, when the windows, doors and sliding roof/hood are closed and during normal heating or ventilation operation, the first and the second fan (5 and 13, respectively) can be controlled via a controlling device (17) in such a manner that each fan (5, 13) only effects part of the predetermined rate of air-flow and in that the air pressure in the passenger compartment is always slightly higher than the ambient pressure.

2. Air-conditioning device according to Claim 1, characterised in that an air-conditioning program is given priority over the controlling device (17) for the fans (5, 13), which program determines, independently of the difference between the air pressure in the passenger compartment and the ambient pressure, the rate of air-flow that the fans (5, 13) have to achieve.

3. Air-conditioning device according to Claim 1, characterised in that the first fan (5) is located in the front area of the vehicle and forces the air into the passenger compartment (9) and the second fan (13) is accommodated in the rear area of the vehicle and sucks air out of the passenger compartment (9).

**Revendications**

1. Système de climatisation pour véhicules automobiles, comprenant deux ventilateurs montés en série, caractérisé en ce que, lorsque les fenêtres, les portes et le toit ouvrant/capote sont fermés, en service normal de chauffage ou de ventilation, le premier ventilateur et le second ventilateur (5, 13) sont réglables au moyen d'un dispositif de réglage (17), de telle manière que chaque ventilateur (5, 13) ne produise qu'une partie du débit d'air prédéfini, et que la pression de l'air dans le compartiment des passagers soit constamment un peu plus élevée que la pression ambiante.

2. Système de climatisation selon la revendication 1, caractérisé en ce que le dispositif de réglage (17) pour les ventilateurs (5, 13) est subordonné à un programme climatique qui fixe, indépendamment de la différence entre la pression dans le compartiment des passagers et la pression ambiante, le débit d'air qui doit être produit par les ventilateurs (5, 13).

3. Système de climatisation selon la revendication 1, caractérisé en ce que le premier ventilateur (5) est disposé dans la région avant du véhicule automobile et refoule l'air dans le compartiment des passagers (9), et le second ventilateur (13) est logé dans la partie arrière du véhicule automobile et aspire de l'air à partir du compartiment des passagers (9).